**Europäisches Patentamt**

**European Patent Office**

**Office européen des brevets**

(11) Publication number: **0 212 000 B1**

(12) **EUROPEAN PATENT SPECIFICATION**

(45) Date of publication of patent specification: **23.05.90**

(21) Application number: **85112522.9**

(22) Date of filing: **03.10.85**

(51) Int. Cl.⁵: **G 01 F 1/075**

(54) **Flow meter.**

(30) Priority: **13.08.85 JP 176837/85**

(43) Date of publication of application:
**04.03.87 Bulletin 87/10**

(45) Publication of the grant of the patent:
**23.05.90 Bulletin 90/21**

(84) Designated Contracting States:
**CH DE FR GB LI**

(56) References cited:
**EP-A-0 100 393**
**DE-C- 111 118**
**FR-A-2 263 496**

(73) Proprietor: **Kimmon Manufacturing Co., Ltd.**
**2-3, Shimura 1-chome**
**Itabashi-ku, Tokyo (JP)**

(72) Inventor: **Onoda, Hajime**
**4-15-17, Komagome Toshima-ku**
**Tokyo (JP)**
Inventor: **Sato, Wataru**
**1-15-5-414, Aoki**
**Kawaguchi-shi Saitama-ken (JP)**

(74) Representative: **Strasse, Joachim, Dipl.-Ing.**
**et al**
**Eisenführ, Speiser & Strasse**
**Zweibrückenstrasse 17**
**D-8000 München 2 (DE)**

**EP 0 212 000 B1**

Courier Press, Leamington Spa, England.

## Description

To date, various types of flow meters have been proposed for measuring the flow rate of a fluid conducted through a closed passage such as a water pipe. A conventional representative flow meter comprises an impeller housing directly connected to a closed fluid passage such as a water pipe, and provided with an impeller which is rotated by the fluid running through the impeller housing. This kind of meter is designed to determine the flow rate of a fluid from the number of the rotations of the impeller which is turned by the pressure of a fluid conducted through the impeller housing. With the above-mentioned type of flow meter, the rotation speed of the impeller is reduced stepwise. The flow rate is indicated in a prescribed unit of, for example, $m^3$ by an integration counter connected to the final speed reduction step. Further, a smaller flow rate than the prescribed unit is indicated in an analog fashion from the intermediate reduced rotation number of the impeller proportional to the flow rate of the fluid. The above-mentioned flow meter comprises a dry type flow meter whose flow rate indicator provided above the speed reduction mechanism is set apart from the fluid, and the so-called wet type, wherein the integration counter is immersed in the fluid, thus allowing circulation.

The above-mentioned dry type flow meter has the drawbacks that moisture contained in the air remaining in the flow rate indicator is turned into steam depending on the difference between the temperature prevailing inside and outside of the flow rate indicator, and tends to condense on the front glass window of the flow rate indicator, thereby clouding the window surface. With the dry type flow rate indicator which is provided with a ventillation port to suppress the above-mentioned temperature difference, foreign matter such as dust tends to be carried in together with the influx of air, thereby obstructing the reading of the flow rate scale.

The wet type flow meter in which the fluid circulates through the flow meter has the drawbacks that dirt, etc., contained in the fluid is deposited on the inside of the integration counter or the front glass window, particularly in those sections over which the fluid flow is slow, gas bubbles contained in the fluid settle down on the inside of the glass window fitted to the uppermost part of the flow meter, and water vapour included in said gas bubbles is condensed depending on the difference between the temperatures inside and outside of the glass window, thereby presenting difficulties in reading because of the clouding of the inner wall of the glass window.

To resolve the drawbacks accompanying the above-mentioned conventional flow meters, a liquid-seal type flow meter has been developed, which is constructed by sealing a transparent liquid between an integration counter case housing an integration counter for indicating the flow rate in a prescribed unit and a counter plate held above said integration counter case.

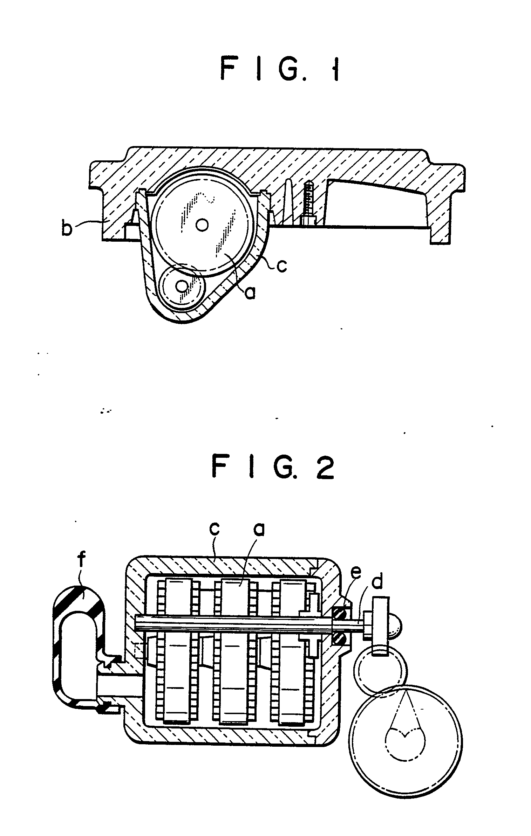

As can be seen from Figs. 1 and 2, the above-mentioned liquid-seal type flow meter comprises an integration counter a held in an integration counter case c open at the top. The integration counter case c is fitted into the cavity of a transparent counter plate b. The counter plate b and integration counter c are integrally fabricated by means of, for example, welding. The transparent liquid is sealed in a space defined by the counter plate b and integration counter c. Since the counter plate c of this flow meter is transparent, it is easy to read the indications given by a pointer directly connected to a speed reduction mechanism and intended to display small flow rates measured in smaller units than the prescribed unit. Since the transparent liquid is sealed in an area defined between the counter plate b and integration counter c, the number indicated by the integration counter optically floats upward to facilitate reading, thereby suppressing the intrusion of foreign matter entrained in the fluid and the clouding caused by the deposition of water vapour. The above-mentioned conventional flow meter comprises a shaft d generating that section of an integration counter case where an integration counter is received. A number representing the final speed-reduced rotation number obtained from the speed reduction mechanism is transmitted to the outside of said penetrating shaft d. Inside the flow meter is provided a drive gear for driving a numeral wheel. An O-ring e is fitted between the penetrating shaft d and integration counter case c, thereby rendering the intervening space liquid-tight. However, the liquid-seal type flow meter has the drawbacks that if the liquid seal structure is rendered rigid, a higher resistance arises between the O-ring and penetrating shaft, leading to a decline in the precision of the flow meter. Conversely when the flow meter is improved in precision at the sacrifice of the above-mentioned liquid tight structure, difficulties arise in reading the indicating section due to the mixture of the transparent liquid with the intratube fluid and the intrusion of air bubbles which might arise from changes in the pressure of the fluid in the sealed tube. It is true, however, that even if the liquid seal structure is rigid, a difference arises between the pressures prevailing inside and outside of the integration counter case, depending on the rotation of the numeral wheel of the integration counter housed in the integration counter case c and that of the drive gear, and the sealed transparent liquid tends to leak, failing to provide a perfectly liquid-tight structure. Consequently it is necessary to fit a rubber bag f to the integration counter case c to balence pressures prevailing inside and outside of the integration counter case c, thereby suppressing the leakage of the transparent liquid.

The aforementioned liquid-seal flow meter has the drawbacks that since the penetrating shaft d supported by the O-ring undergoes resistance in rotation from said O-ring, it is impossible to accurately measure the flow rate of a fluid if the flow rate is low and there is small rotation torque applied to the impeller. Further, the originally intended object can not be attained due to the deterioration of the quality of the O-ring and rubber glove and the resultant wear of the bearing section. Further, the integration counter case c should be of the assembled type in order to allow for the fitting of the penetrating shaft d. When the integration counter a is held in the integration counter case c, it is necessary first to attach the penetrating shaft d already fitted with the drive gear to the integration counter case c, and then let fall the shaft fitted with a normal wheel into the depression of the counter case for engagement with the drive gear, and then integrally weld the whole assembled mass to the counter plate. For the reason given above, the assembly of the integration counter calls for high skill and consumes much time, leading to high cost. A flow motor according to the preamble of claim 1 is known from FR—A—2263456. The counter house is above the reduction mechanism and has a cover portion with side walls having bearings for the shaft supporting the numeral wheels.

A liquid-seal flowmeter with a magnetic coupling is known from EP—A—100393. The measuring chamber side of the casing under the measuring mechanism is isolated from the space surrounding the measuring mechanism by a partition member. Said space accommodates the reduction mechanism and the integration counter and is formed by a bottom and a cover portion which support the shafts of the wheels and gears.

This invention has been accomplished to improve the conventional liquid seal type flow meter. To attain the above-mentioned object, this invention provides a liquid-seal type flow meter according to claim 1. Embodiments of the invention are characterized by the dependent claims.

Therefore even when there is only a small flow of fluid, the accurate measurement of the flow rate of said fluid is ensured. The integration counter can be easily built in the counter case without any high degree of skill and in a short length of time, and measured data can be distinctly read over a long period. The device can also be readily fitted to a running water system.

The above-mentioned and other objects of this invention will become apparent from the following description which is given with reference to the characteristics of the invention and accompanying drawings.

This invention can be more fully understood from the following detailed description when taken in conjunction with the accompanying drawings, in which:

Fig. 1 is a longitudinal sectional view of the integration counter housing of the conventiona flow meter;

Fig. 2 is a crosswise sectional view of the integration counter housing of the conventional flow meter of Fig. 1;

Fig. 3 is a longitudinal sectional view of a flow meter embodying this invention which is fitted into a running water pipe;

Fig. 4 is a sectional view of the counter section of the flow meter of Fig. 3;

Fig. 5 is a fractional exploded oblique view of the flow meter of Fig. 3;

Fig. 6 is a top view of the counter case assembly of the flow meter of Fig. 3;

Fig. 7 is a sectional view on line 7-7 of Fig. 6;

Fig. 8 is a bottom view of the counter case assembly of Fig. 6;

Fig. 9 is a front view of the flow amount indicating board involved in the flow meter of Fig. 3;

Fig. 10 is a sectional view on line 10-10 of Fig. 9;

Fig. 11 is a side view on line 11-11 of Fig. 9; and

Figs. 12 and 13 are comparative diagrams showing the flow rate-measuring range of the flow meter of this invention fitted to the larger and smaller diameter running water pipes and the flow rate-measuring range of the conventional flow meter applied to the similar larger and smaller diameter running water pipes.

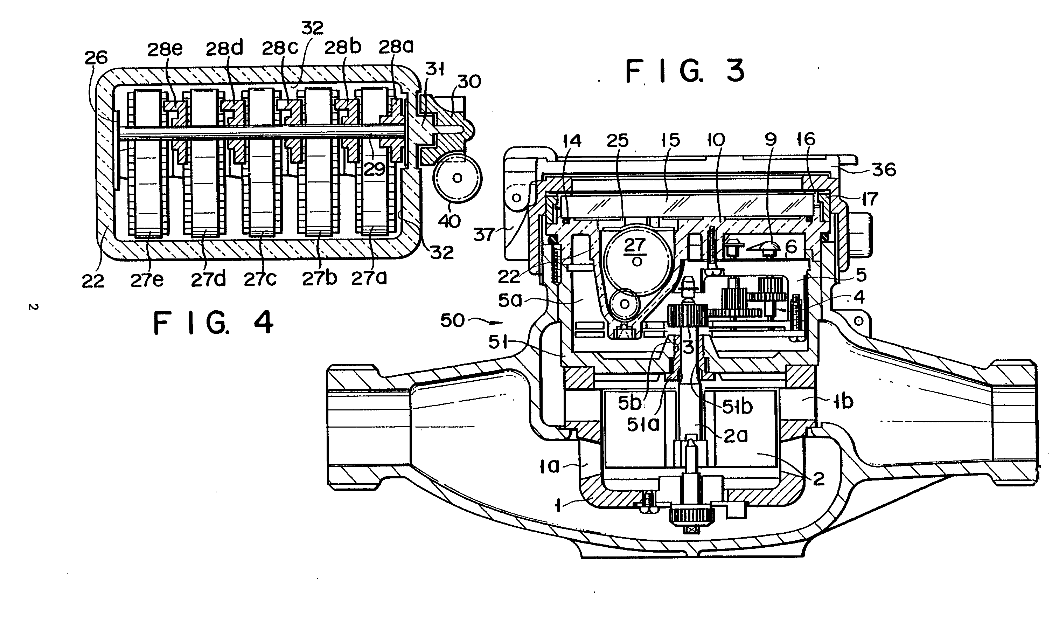

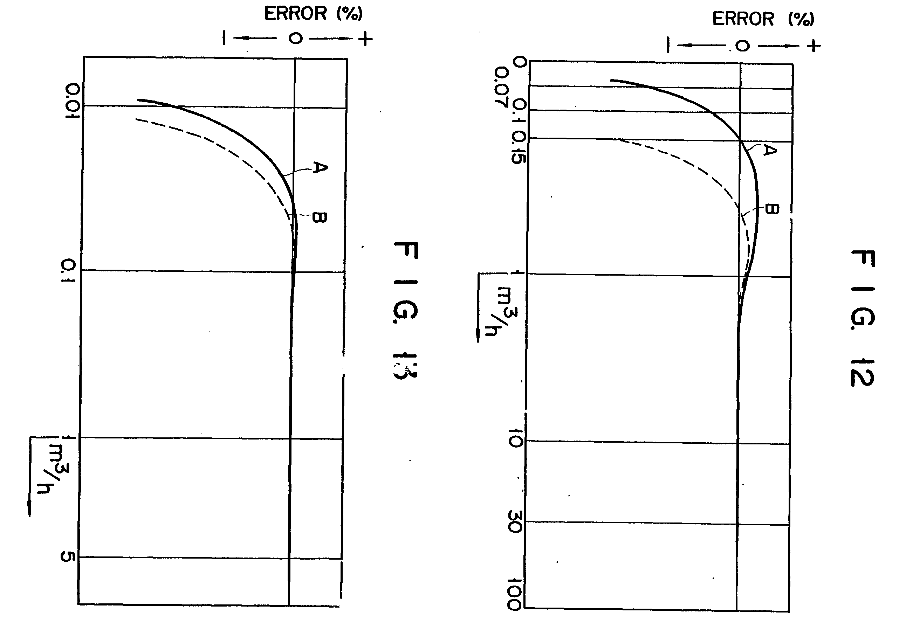

Liquid seal type flow meters embodying this invention are shown in Figs. 3 to 11. As shown in Fig. 3, the subject flow meter 50 comprises an impeller housing 1 held in a meter case set in series at an intermediate point of a running water pipe and a counter housing 51 mounted on the impeller housing 1. The impeller housing 1 holds an impeller 2 adapted to be rotated by the pressure of the water running through the impeller housing. Received in the counter housing 51 is a support case 5 holding a reduction mechanism 4. The rotatable shaft 2a of the impeller 2 extends into the interior of the counter housing 51 through a bearing 51a allowing for the rotatable insertion of the rotatable shaft 2a.

The running water brought in at an inlet 1a of the impeller housing 1 causes the impeller 2 to be rotated about the rotary shaft 2a and flows out at the rear outlet 1b to be put to the required application. The rotation of the impeller 2 is transmitted to the reduction mechanism 4 provided with a plurality of reduction steps through a gear 3 fitted to the outer end of the rotary shaft 2a. The reduction mechanism 4 is fabricated in the form of a reduction gear assembly built in a cylindrical support case 5. A proper opening 5a is provided on the side of the support case 5. The running water is carried in and out through said opening 5a. Provided in the bottom wall of the support case 5 is an opening 5b allowing for the insertion of the rotary shaft 2a of the impeller 2. The position of the opening 5b matches that of the hole 51b allowing for the insertion of the rotary shaft 2a held at the bottom of the counter housing 51.

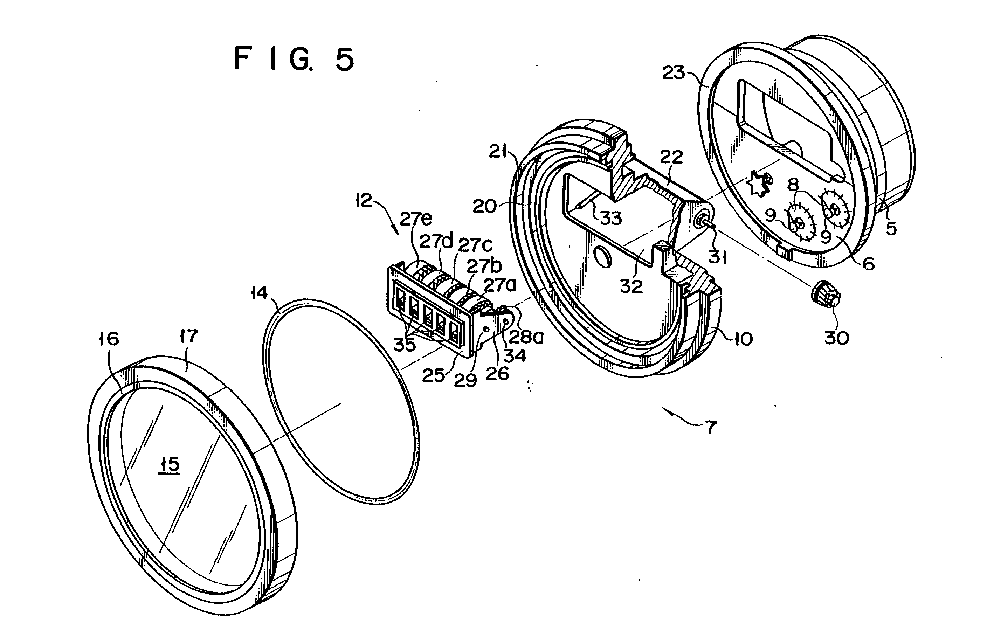

As seen from Fig. 5, the upper place of the support case is provided with a stepped portion 23 engageable with the backside or underside of the later described counter case assembly 7 and a cavity 22 for receiving the counter unit 12 involved in the counter case assembly. A display board 6 indicating a smaller flow rate of running water than the prescribed unit is mounted on the support case 5. With the indicated embodiment, the display board 6 shows scales 8 representing, for example, flow rate units of 0.1 m$^3$ and 0.01 m$^3$ smaller than the prescribed flow rate unit of 1 m$^3$. Pointers 9 coupled to the rotation reduction steps corresponding to the flow rate represented by the scales 8 set forth the small flow rates. The pointers 9 are fitted to the outer ends of the corresponding rotary shafts which extend from the reduction mechanism held in the support case 5, over the surface of the support case 5 and through the display board 6, and are rotated at a speed proportional to the flow rate of the running water.

A counter assembly 7 is fitted to the surface of the support case 5 by proper fixing means such as screws. As shown in Figs. 5 to 8, the counter case assembly 7 is formed of a counter case 10, counter assembly 12, O-ring 14, glass plate 15, metal keep ring 16 having a Z-letter shaped section and tightening ring 17 whose inner wall is provided with threaded portions.

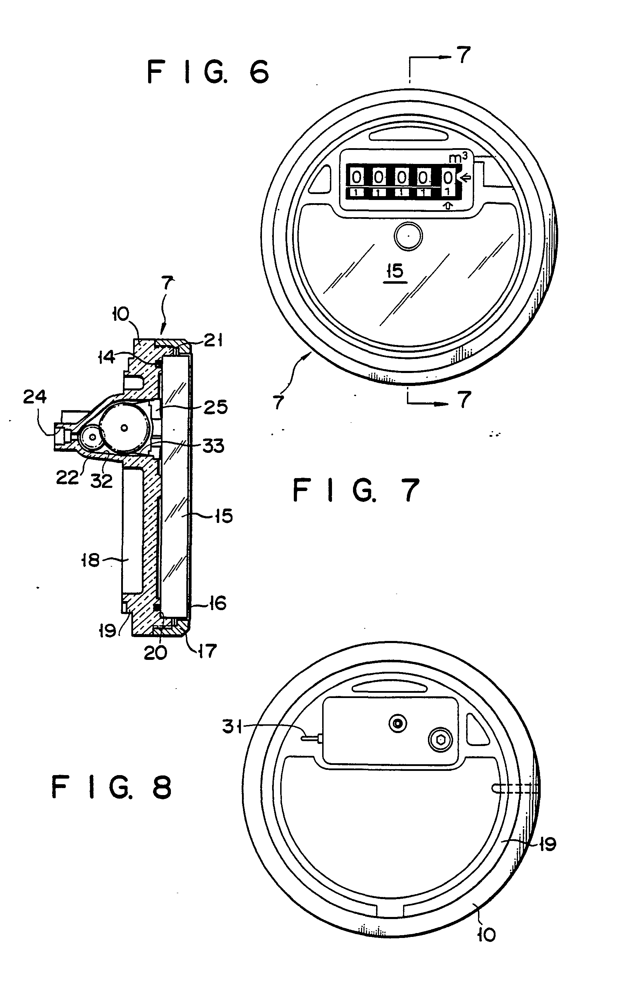

The counter case 10 is integrally prepared from transparent resin with sufficeint toughness to withstand the pressure prevailing in the running water pipe. Provided on the back side of the counter case 10 are a space 18 allowing for the free rotation of the pointer 9 projecting above the support case 5 and the locating stepped portion 19 engaged with the stepped portion 23 of the support case 5 (Fig. 7). The groove 20 into which the O-ring 14 is fitted is formed on the front or upper plane of the counter case 10. A screw threaded into the tightening ring 17 is provided on the outer peripheral wall of the cylindrical projection surrounding said groove 20.

As shown in Fig. 3, the cavity 22 of the counter assembly 12 is provided at the front side of the counter case 10. Guide rails 33 are provided along the four corners of said opening 32. The counter assembly 12 is securely set in the opening 32 by means of the guide rails 33. As shown in Fig. 4, a receptacle 31 is provided on the outside of said cavity 22 to rotatably support the drive side member of the magnetic coupling means for driving the integration counter. The drive side member is fabricated in the form of a worm gear 30 which is engaged with a worm gear 40 meshed with the final reduction step of the reduction mechanism 4. The worm gear 30 is prepared from plastics material containing strontium-ferrite powder.

The driven side member of the magnetic coupling means of the counter assembly 12 is received in the cavity 22 so as to face the side of the receptacle 31. The O-ring 14 is fitted into the groove 20. The glass plate 15 and keep ring 16 are set on the front plane of the counter case in the order mentioned. The tightening ring is threaded into the screw section of the outer peripheral wall of the projecting member 21. Then the interior of said counter case assembly 7 is rendered completely liquid-tight. Transparent liquid harmless to human people and which should preferably be unfreezable is sealed in said counter case assembly 7 through an injection port 24 equipped with a proper plug shown in Fig. 3. This arrangement prevents foreign matter such as air or rust settled on the inner wall of a water pipe from being carried into the counter case assembly 7. Consequently, no clouding appears on the glass plate 15. When the counter case assembly 7 is mounted on the support case 5, it is possible to observe the positions of pointers indicating minute flow rates of a fluid.

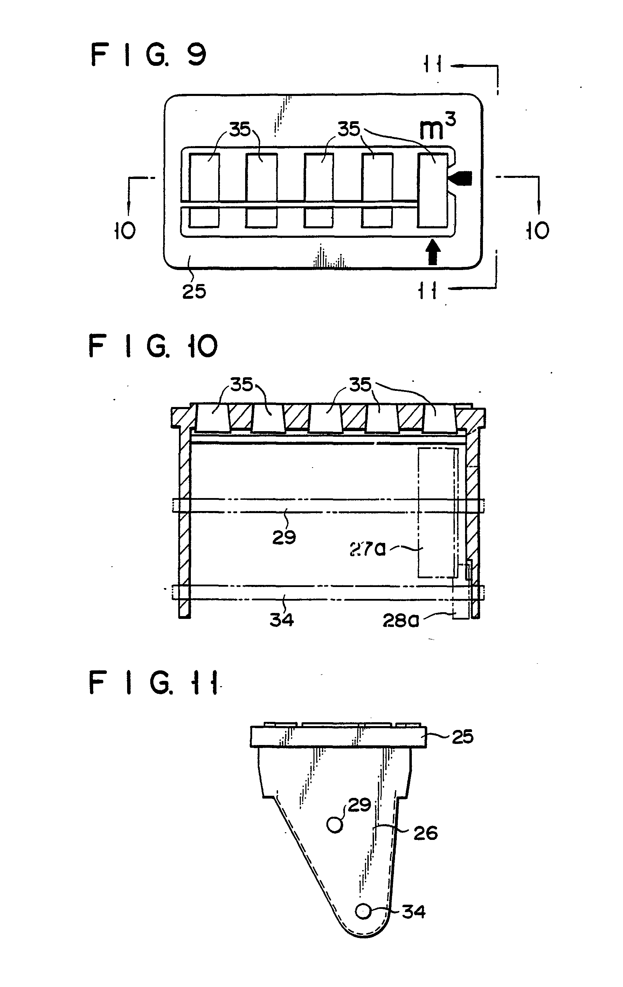

As seen from Fig. 5, the integration counter assembly 12 is built into a single cartridge comprising a flow amount indicating board 25, a plurality of numeral wheels 27 fitted to the leg member 26 extending rearward from both sides of the flow amount indicating board 25, and a plurality of drive gears 28 for turning the numeral wheels 27. The flow amount indicating board 25 is illustrated in Figs. 9 to 11. The numeral wheels 27 and drive gears 28 are shown in Fig. 4.

As seen from Figs. 9 to 11, a plurality of openings 35 are formed in front of the flow amount indicating board 25 to display numerals indicated by the respective numeral wheels 27. A tapering leg member 26 extends rearward from both sides of the front plane of the flow amount indicating board 25. The leg member 26 is guided along the guide rail 33 (Fig. 7). When the leg member 26 is received in the opening 32 of the counter assembly cavity 22, no clattering is produced in the opening 32. The leg members 26 in both sides of the flow amount indicating board 25 are provided with pivotal shafts 29 for rotatably supporting the numeral wheels 27 and pivotal shafts 34 for rotatably supporting the drive gears 28.

As shown in Figs. 4 and 5, the pivotal shafts 34 are fitted with a rotatable drive gear 28a integrally provided with a toothed section meshing with the outermost numeral wheel 27a. The drive gear is fabricated in the form of a pinion 28a prepared from plastics material containing, for example, strontium-ferrite powder. The pinion 28a constitutes the driven member of the magnetic coupling means. When the pinion 28a is rotated interlocking with the rotation of the worm gear 30, the outermost numeral wheel 27a is interlockingly driven. Each time the numeral wheel 27a makes a turn, a numeral wheel 27b having a position on digit higher than said outermost numeral wheel 27a is rotated by means of a pinion 28b. Likewise each time the numeral wheel 27b makes a turn, a numeral wheel 27c having a position one digit higher than said numeral wheel 27b is rotated by means of the corresponding pinion 28c. This operation continues all along the system. Thus the numbers of the rotations of the impeller 2 obtained through the reduction mechanism 4 provided in the support case 5 are integrated by means of said respective numeral wheels 27. The flow meter embodying this invention comprises five numeral wheels. Obviously, it is possible to change the number of the numeral wheels 27 to any optional number as the need arises, for example, 3, 4 or 6.

With this invention, the numeral wheel 27 is constructed by cutting out holes representing numerals 0 to 9 in the peripheral surface of a black resin wheel, and engaging numerals 0 to 9 projectively formed on the outer peripheral wall of a white resin wheel with the above-mentioned holes. The numeral wheel 27 being of the 2-color type, make the distinct.

With this invention, the pivotal shaft 34 of the drive gear 28 is provided on the leg member 26 of the flow amount indicating board 25. The pivotal shaft 34 does not penetrate the counter case 10, thus making it unnecessary to provide a liquid-sealing mechanism, for example, an O-ring in the penetrated section which had to be formed in the conventional liquid seal type flow meter. Further, it is unnecessary to fix the nearest drive wheel 28, that is, the pinion 28a to the pivotal shaft 34. Consequently, the integration counter has a very small drive torque, ensuring the accurate measurement of even a minute flow rate.

When the flow meter of this invention is built in the counter housing 51 positioned in the upper portion of the impeller housing 1, the following steps are taken. As shown in Fig. 5, a worm gear 30 is first fitted to the receptacle 31 of the counter case assembly 7. The worm gear 30 is meshed with the worm 40 of the reduction mechanism 4. Later, the counter case assembly 7 now fitted with the worm gear 30 is securely attached to the support case 5 by means of screws, for example. The gear 3 of the impeller 2 and reduction mechanism 4 are inserted into the counter housing 51 through the upper opening in the mutually engaged state. Later, the upper case (Fig. 3) pivotally fitted with a cap 36 is, for example, threaded into the outer periphery of the upper opening of the meter case, thereby completing the construction of the subject flow meter.

The counter case assembly 7 can be built into a single cartridge as a subassembly before being assembled in the cavity 22 of the counter case 10. Therefore, this invention offers the advantages that the flow meter 50 can be easily assembled; the counter assembly 12 is readily exchangeable; no advanced skill is required as is the case with the conventional flow meter, which is constructed by fitting the separate members into place one after another.

The following is a description of the operation of a flow meter which is constructed as described above. When the impeller 2 is rotated by the pressure of water conducted through the impeller housing 1, the rotating moment is transmitted from the gear 3 to the reduction mechanism 4. Minute flow rates are indicated from the intermediate reduction steps of the reduction mechanism 4 by means of a plurality of pointers. The rotating moment transmitted from the output worm 40 of the final reduction step of the reduction mechanism 4 to the drive side member of the magnetic coupling means is further conducted to the pinion 28a, that is, the driven member of the magnetic coupling means set opposite to the side wall of the cavity 22 of the counter case 10. The above-mentioned rotating moment is finally integrated by means of the integration counter assembly 12.

The flow meter embodying this invention does not involve a shaft penetrating the counter case, thereby enabling the numeral wheels to be rotated with a far smaller torque than in the conventional flow meter. The present inventor's experiment shows that in the case of a pipe having a large diameter of 50 mm as indicated by numeral A in Fig. 12, the flow meter embodying this invention could measure such small flow rates 0.07 $m^3$/h which failed to be determined by the conventional flow meter as indicated by numeral B. With a small pipe having a diameter of 20 mm, the flow meter of this invention could measure such a minute flow rate as 0.07 $m^3$/h as seen from Fig. 13. Further, the flow meter of the present invention dispenses with the rubber glove and O-ring indicated in Fig. 2, thus ensuring the distinct reading of numerals representing flow rates, however, small, over a long period of time and facilitating the fitting to the water pipe.

## Claims

1. A flow meter which comprises an impeller (2) to be rotated by a fluid running through a pipe, a reduction mechanism (4) for reducing rotation of the impeller (2), and an integration counter assembly (12) which has a plurality of numeral wheels (27), which is to be driven by the reduction mechanism (4) through magnetic coupling means (28a, 30) and which is accommodated in a sealed counter case (10) and thus kept separate from the fluid running through the pipe, characterized in that, the counter case (10) has an opening (32) being sealed by a glass plate (15); and said integration counter assembly (12) includes: an indicating board (25); a pair of leg members (26) extending from respective ends of the indicating board and being guided into said opening (32); the plurality of numeral wheels (27) fitted to the leg members by means of a shaft (29); and a plurality of drive pinion gears (28) for driving the numeral wheels, said indicating board (25), said leg members (26), said numeral wheels (27), and said drive pinion gears (28) being inserted into the opening (32) as one body.

2. A flow meter according to claim 1, in which said magnetic coupling means includes: a worm gear (30) to be rotated by a final reduction step of the reduction mechanism (4); and a pinion gear (28a) arranged in a vicinity of one of the leg members (26), said worm gear (30) and said pinion gear (28a) being formed from plastic magnets.

3. A flow meter according to claim 2, in which said opening (32) includes a guide rail (33) for guiding the leg members (26) of the integration counter assembly (12).

4. A flow meter according to claim 3, in which said counter case (10) is formed of transparent resin and has space (18) open into a region opposite to the opening (32), said space (18) containing a pointer (9) directly connected to said reduction mechanism (4).

**Patentansprüche**

1. Ein Flüssigkeitszähler, bestehend aus einem Laufrad (2), welches von einem ein Rohr durchlaufendes Strömungsmedium gedreht wird, einem Untersetzungsmechanismus (4) zur Herabsetzung der Drehung des Laufrades (2), und einer Integrationszählereinheit (12), welche eine Vielzahl von Zahlenrädern (27) aufweist, welche von dem Untersetzungsmechanismus (4) über magnetische Koppelvorrichtungen (28a, 30) getrieben wird, und welche in einem dicht verschlossenen Zählergehäuse (10) angeordnet ist und daher von dem das Rohr durchlaufenden Strömungsmedium getrennt ist, dadurch gekennzeichnet, daß das Zählergehäuse (10) eine durch eine Glasplatte (15) verschlossene Öffnung (32) aufweist; und die Integrationszählereinheit (12) sich aus folgenden Teilen zusammensetzt; einer Anzeigetafel (25); einem Paar Schenkelglieder (26), welche sich von den jeweiligen Enden der Anzeigetafel erstrecken und in die Öffnung (32) geführt sind; die Vielzahl der Zahlenräder (27) sind hierbei mittels einer Welle (29) an den Schenkelgliedern befestigt; und einer Veilzahl von Antriebsritzeln (28) zum Antreiben der Zahlenräder, wobei die Anzeigetafel (25), die Schenkelglieder (26), die Zahlenräder (27) und die Antriebsritzel (28) als eine Gesamtheit in die Öffnung (32) eingesetzt sind.

2. Flüssigkeitszähler nach Anspruch 1, dadurch gekennzeichnet, daß die magnetische Kopplungsvorrichtung folgende Teile umfaßt: ein Schnekkenrad (30), welches in einer letzten Untersetzungsstufe des Untersetzungsmechanismus (4) gedreht wird; und ein Ritzel (28a), welches in der Nähe eines der Schenkelglieder (26) angeordnet ist, wobei das Schneckenrad und das Ritzel (28a) aus magnetischem Plastikwerkstoff gebildet sind.

3. Flüssigkeitszähler nach Anspruch 2, dadurch gekennzeichnet, daß die Öffnung (32) eine Führungsschiene (33) zur Führung der Schenkelglieder (26) der Integrationszählereinheit (12) umfaßt.

4. Flüssigkeitszähler nach Anspruch 3, dadurch gekennzeichnet, daß das Zählergehäuse (10) aus durchsichtigem Kunstharz besteht und einen in einen der Öffnung (32) gegenüberliegenden Bereich offen mündenden Raum (18) aufweist, welcher einen unmittelbar mit dem Untersetzungsmechansimus (4) verbundenen Zeiger (9) beherbergt.

**Revendications**

1. Débitmètre comportant un rotor (2) tournant en étant entraîné par un fluide qui circule à travers un tuyau, un mécanisme de réduction (4) pour réduire la rotation du rotor (2), et un ensemble (12) de compteur d'intégration qui possède une pluralité de roues numériques (27), devant être entraîne par le méchanisme de réduction (4) par l'intermédiaire de moyens (28a, 30) de couplage magnètique et qui est disposé dans un boîtier (10) de compteur scellé, et qui est par conséquent maintenu séparé du fluide s'écoulant par le tuyau, caractérisé en ce que, le boîtier (10) de compteur possède une ouverture (32) fermée par une plaque de verre (15); et ledit ensemble (12) de compteur d'intégration comporte; un panneau d'indications (25); une paire d'éléments (26) de patte s'étendant depuis les extrémités respectives du panneau d'indications et étant guidés dans ladite ouverture (32); la pluralité de roues numériques (27) fixées aux éléments de patte au moyen d'un arbre (29) et une pluralité de roues dentées (28) d'entraînement pour entraîner les roues numériques, ledit panneau d'indications (25), lesdits éléments de patte (26), lesdites roues numériques (27), et lesdites roues dentées (28) étant insérés dans l'ouverture (32) et constituant un corps unique.

2. Débitmètre selon la revendication 1, dans lequel lesdits moyens de couplage magnètique comportent; une vis sans fin (30) devant tourner sous l'effet d'un étage de réduction final du mécanisme de réduction (4); et une roue dentée (28a) disposée au voisinage de l'un des éléments de patte (26), ladite vis sans fin (30) et ladite roue dentée (28a) étant formées d'aimants plastiques.

3. Débitmètre selon la revendication 2, dans lequel ladite ouverture (32) comporte une barre de guidage (33) pour guider les éléments de patte (26) de l'ensemble (12) de compteur d'intégration.

4. Débitmètre selon la revendication 3, dans lequel ledit boîtier (10) de compteur est formé de résine transparente et a un espace (18) ouvert dans une région opposée à l'ouverture (32), ledit espace (18) contenant une aiguille (9) directement connectée audit mécanisme de réduction (4).

# F I G. 1

# F I G. 2

F I G. 3

F I G. 4

F I G. 5

FIG. 6

FIG. 7

FIG. 8

F I G. 9

F I G. 10

F I G. 11

5

# F I G. 12

# F I G. 13